# EUROPÄISCHE PATENTSCHRIFT

(11) **EP 4 157 652 B1**
(45) Veröffentlichungstag und Bekanntmachung des Hinweises auf die Patenterteilung: **03.07.2024**
(21) Anmeldenummer: 21722116.7
(22) Anmeldetag: 21.04.2021
(51) Int. Cl.: B60G 7/00, B60G 17/019

(54) **FAHRWERKBAUTEIL UND VERFAHREN ZUM HERSTELLEN EINES SOLCHEN FAHRWERKBAUTEILS**
CHASSIS COMPONENT AND METHOD FOR PRODUCING A CHASSIS COMPONENT OF THIS TYPE
COMPOSANT DE CHÂSSIS ET PROCÉDÉ DE PRODUCTION D'UN COMPOSANT DE CHÂSSIS DE CE TYPE

(30) Priorität: 25.05.2020 DE 102020206438
(43) Veröffentlichungstag der Anmeldung: 05.04.2023
(73) Patentinhaber: ZF Friedrichshafen AG, 88046 Friedrichshafen (DE)
(72) Erfinder: BERGER, Artur, 49163 Bohmte (DE); MEINDL, Sebastian, 67574 Osthofen (DE); HOLTHAUS, Tim, 48324 Sendenhorst (DE)
(74) Vertreter: ZF Friedrichshafen AG
(86) Internationale Anmeldenummer: PCT/EP2021/060291
(87) Internationale Veröffentlichungsnummer: WO 2021/239336

(56) Entgegenhaltungen:
- EP-A1- 1 688 727
- EP-A2- 2 000 335
- DE-A1-102014 223 654
- DE-A1-102017 211 396
- DE-A1-102018 216 061
- DE-A1-102018 217 641
- DE-A1-102018 217 642
- DE-A1-102018 217 643

## Beschreibung

Die Erfindung betrifft ein Fahrwerkbauteil mit einem ersten Endabschnitt und einem zweiten Endabschnitt, wobei zwischen den beiden Endabschnitten ein Verbindungsabschnitt angeordnet ist, mit mindestens einem Lager in einem der beiden Endabschnitte, und mit einer Sensoreinrichtung, wobei ein Sensorgehäuse ein erstes Sensorelement der Sensoreinrichtung aufweist und die beiden Endabschnitte und der Verbindungsabschnitt als ein einteiliges und über die Längserstreckung einseitig offenes Profil ausgebildet ist, wobei das offene Profil einen mindestens teilweise freien Innenraum bildet. Des Weiteren betrifft die Erfindung ein Verfahren zum Herstellen eines solchen Fahrwerkbauteils.

Ein derartiges Fahrwerkbauteil ist aus der DE 10 2018 217 643 A1 bekannt.

Aus der DE 10 2014 223 654 A1 ist ein Fahrwerkbauteil mit einer Sensoreinrichtung bekannt, wobei das Sensorelement vollständig innerhalb eines hermetisch abgeschlossenen Hohlkörpers angeordnet ist.

Die DE 10 2019 201 521 A1 offenbart eine Sensoreinrichtung mit einer stiftartigen Sensorstrebe, die in eine sacklochartige Vertiefung des Fahrwerkbauteils eingesteckt ist.

Die Dokumente DE 10 2018 217 641 A1 und DE 10 2018 217 642 A1 zeigen andere Fahrwerkbauteile mit einer Sensoreinrichtung.

Jedoch bietet nicht jedes Fahrwerkbauteil die Möglichkeit der Ausbildung einer sacklochartigen Vertiefung. Insbesondere bei aus Blech gebildeten Fahrwerkbauteilen besteht diese Möglichkeit in der Regel nicht. Es besteht daher die Notwendigkeit, eine weitere Möglichkeit zur Befestigung einer Sensoreinrichtung und/oder eines Sensorgehäuses an einem Fahrwerkbauteil, insbesondere an einem Blecklenker, zu entwickeln bzw. vorzuhalten.

Es ist die der Erfindung zu Grunde liegende Aufgabe, ein Fahrwerkbauteil und/oder ein Verfahren der eingangs genannten Art derart weiterzuentwickeln, dass eine Anordnung der Sensoreinrichtung und/oder des Sensorgehäuses an dem Fahrwerkbauteil verbessert und/oder ermöglicht ist. Insbesondere soll eine alternative Ausführungsform bereitgestellt werden.

Die der Erfindung zu Grunde liegende Aufgabe wird mit einem Fahrwerkbauteil nach Anspruch 1 und/oder mit einem Verfahren nach Anspruch 9 gelöst. Bevorzugte Weiterbildungen der Erfindung finden sich in den Unteransprüchen und in der nachfolgenden Beschreibung.

Demnach betrifft die Erfindung ein Fahrwerkbauteil. Insbesondere ist das Fahrwerkbauteil in einem Fahrwerk eines Fahrzeugs, vorzugsweise eines Kraftfahrzeugs, angeordnet. Bei einem Fahrwerkbauteil kann es sich im Allgemeinen um einen Fahrwerkträger, einen Querträger, einen Achsträger, ein Flanschgelenk, einen Radträger oder einen Fahrwerkslenker handeln. Das Fahrwerkbauteil weist einen ersten Endabschnitt und einen zweiten Endabschnitt auf. Insbesondere sind die beiden Endabschnitte an zwei voneinander abgewandten Enden des Fahrwerkbauteils ausgebildet. Das Fahrwerkbauteil kann strebenartig und/oder im Wesentlichen gerade ausgebildet sein. Zwischen den beiden Endabschnitten ist ein Verbindungsabschnitt angeordnet. Der Verbindungsabschnitt kann im Wesentlichen strangartig ausgebildet sein. Des Weiteren weist das Fahrwerkbauteil eine Sensoreinrichtung auf. Ein Sensorgehäuse hat ein erstes Sensorelement der Sensoreinrichtung. Insbesondere ist die Sensoreinrichtung als eine Winkelmesseinrichtung ausgebildet. Vorzugsweise ist mittels der Sensoreinrichtung eine relative Verdrehung des Fahrwerkbauteils um eine Drehachse des Lagers erfassbar und/oder messbar. Die beiden Endabschnitte und der Verbindungsabschnitt sind als ein einteiliges und über die Längserstreckung einseitig offenes Profil ausgebildet, wobei das offene Profil einen mindestens teilweise freien Innenraum bildet. Hierbei ist das erste Sensorelement innerhalb des Innenraums angeordnet.

Hierbei ist von Vorteil, dass mindestens das erste Sensorelement aufgrund der Anordnung innerhalb des Innenraumes des offenen Profils gegenüber äußeren Einflüssen hinreichend geschützt ist. Insbesondere ist das erste Sensorelement hierdurch möglichst nahe am Lager und/oder einen im Lager angeordneten zweiten Sensorelement positioniert oder positionierbar.

Vorzugsweise weist das Fahrwerkbauteil, insbesondere im Bereich des Verbindungsabschnitts, einen U-förmigen oder C-förmigen Querschnitt auf. Insbesondere weist das offene Profil einen im Wesentlichen U-förmigen oder C-förmigen Querschnitt auf. Des Weiteren kann das Fahrwerkbauteil als ein 2-Punkt-Lenker ausgebildet sein. Vorzugsweise ist das Fahrwerkbauteil als ein Blechlenker, insbesondere ein Blech-Querlenker, ausgebildet. Somit können die Endabschnitte und der Verbindungsabschnitt einstückig aus einem umgeformten Blech gebildet sein. Als Material für das Blech kann Stahl oder Aluminium verwendet werden. Im ersten Endabschnitt und/oder im zweiten Endabschnitt kann eine Lageraufnahme zum Anordnen oder Einpressen des Lagers ausgebildet sein.

Gemäß einer Weiterbildung ist das Sensorgehäuse mittels eines, insbesondere separaten und/oder eigenständigen, Befestigungsmittels an einer Wand des offenen Profils befestigt. Das Befestigungsmittel kann als eine Niete oder als eine Schraube ausgebildet sein. Das Sensorgehäuse kann einen Durchbruch und/oder eine Bohrung zum teilweisen Durchstecken des Befestigungsmittels aufweisen. Insbesondere weist das offene Profil bzw. die Wand des offenen Profils eine Befestigungsöffnung zum Einstecken, Einpressen oder Einschrauben des Befestigungsmittels auf. Insbesondere ist das Sensorgehäuse aufgrund der Befestigung mittels des Befestigungsmittels positionsfest in Bezug zum offenen Profil an dem Fahrwerkbauteil befestigt. Hierzu kann das Befestigungsmittel formschlüssig und/oder kraftschlüssig mit der Befestigungsöffnung und/oder der Wand des offenen Profils zusammenwirken. Nach einer weiteren Ausführungsform ist das Sensorgehäuse mindestens teilweise in dem Innenraum angeordnet. Insbesondere ist ein Abschnitt des Sensorgehäuses mit dem ersten Sensorelement innerhalb des Innenraums angeordnet. Das Sensorgehäuse kann an einer Außenseite und/oder an einer Innenseite einer Wand des offenen Profils anliegen. Bei einer nicht beanspruchten vollständigen Anordnung des Sensorgehäuses in dem Innenraum wird das gesamte Sensorgehäuse mittels des das Sensorgehäuse umgebenden offenen Profils besonders gut gegenüber äußeren Einflüssen geschützt.

Vorzugsweise ist das Sensorgehäuse aus einem Kunststoff gebildet. Insbesondere ist das Sensorgehäuse als ein Kunststoffspritzteil hergestellt. Hierbei kann das erste Sensorelement in dem Material des Sensorgehäuses eingebettet sein. Hierdurch ist das erste Sensorelement gegenüber äußeren Einflüssen geschützt.

Erfindungsgemäß weist eine Wand des offenen Profils eine Durchgangsöffnung auf. Hierbei erstreckt sich das Sensorgehäuse von einer Außenseite der Wand durch die Durchgangsöffnung in den Innenraum. Insbesondere ist ein Abschnitt des Sensorgehäuses mit dem ersten Sensorelement innerhalb des Innenraums angeordnet. Vorzugsweise ist der Abschnitt des Sensorgehäuses mit dem ersten Sensorelement dem Lager und/oder einem zweiten Sensorelement zugewandt. Ein weitere Abschnitt des Sensorgehäuses kann außerhalb des Innenraums, insbesondere an einer Außenseite einer Wand des offenen Profils, angeordnet sein.

Vorzugsweise weist ein Rand der Durchgangsöffnung einen ersten Steckabschnitt auf. Der erste Steckabschnitt wirkt formschlüssig mit einem korrespondierend zu dem ersten Steckabschnitt ausgebildeten zweiten Steckabschnitt des Sensorgehäuses zusammen. Somit weist das Sensorgehäuse den zweiten Steckabschnitt auf. Die beiden Steckabschnitte bewirken eine formschlüssige Verbindung zwischen dem Sensorgehäuse und der Wand des offenen Profils mit der Durchgangsöffnung. Der erste Steckabschnitt kann als eine nutartige Vertiefung im Rand der Durchgangsöffnung ausgebildet sein. Der Rand der Durchgangsöffnung kann im Wesentlichen rechteckförmig ausgebildet sein, wobei ein Abschnitt des Randes zusätzlich die nutartige Vertiefung aufweist. Insbesondere ist die nutartige Vertiefung in einem zum nächstliegenden Lager benachbarten Abschnitt des Randes der Durchgangsöffnung ausgebildet. Eine korrespondierend zu der nutartigen Vertiefung ausgebildete Einschnürung des Sensorgehäuses kann als zweiter Steckabschnitt ausgebildet sein. Diese Einschnürung des Sensorgehäuses ist in die nutartige Vertiefung formschlüssig eingesteckt. Vorzugsweise ist die Einschnürung aufgrund einer abschnittsweise ausgebildeten Durchmesserreduzierung des Sensorgehäuses gebildet. Zum Ausbilden der Einschnürung kann beispielsweise ein stegartiger Abschnitt des Sensorgehäuses zwei an voneinander abgewandten Seiten angeordnete Nuten aufweisen.

Gemäß einer Weiterbildung weist das Sensorgehäuse eine mindestens einfach gestufte Kontur auf. Alternativ kann das Sensorgehäuse eine zweifach gestufte oder dreifach gestufte Kontur aufweisen. Insbesondere ergibt sich eine einfach oder mehrfach gestufte Kontur in einer Seitenansicht des Sensorgehäuses. Eine solche gestufte Kontur ermöglicht das Einführen des Sensorgehäuses durch die Durchgangsöffnung in der Wand des offenen Profils. Zugleich ist eine insgesamt relativ flache Bauweise realisierbar, bei der ein Abschnitt des Sensorgehäuses an der Außenseite der Wand und ein weiterer Abschnitt des Sensorgehäuses an einer Innenseite der Wand des offenen Profils angeordnet ist. Zudem ermöglicht eine solche Kontur ein möglichst nahes Anordnen des ersten Sensorelementes an dem Lager oder einem zweiten Sensorelement. Vorzugsweise ist das erste Sensorelement an einem ersten Ende des Sensorgehäuses angeordnet. Dieses erste Ende des Sensorgehäuses ist vorzugsweise dem Lager oder einem zweiten Sensorelement zugewandt. Ein Steckabschnitt kann an einem zweiten Ende des Sensorgehäuses ausgebildet sein. Insbesondere ist der Steckabschnitt und/oder das zweite Ende des Sensorgehäuses von dem ersten Ende des Sensorgehäuses abgewandt. Vorzugsweise ermöglicht der Steckabschnitt eine Herstellung einer Verbindung mit einer Auswerteeinheit.

Vorzugsweise weist das Lager ein zweites Sensorelement der Sensoreinrichtung auf. Hierbei wirkt das erste Sensorelement mit dem zweiten Sensorelement zusammen. Insbesondere ist das erste Sensorelement als ein magnetfeldempfindlicher Sensor und das zweite Sensorelement als ein Magnet ausgebildet. Vorzugsweise ist das erste Sensorelement als ein Hall-Sensor ausgebildet. Bei einer Bewegung des Lagers und somit des zweiten Sensorelementes ergibt sich eine Veränderung des Magnetfeldes in Bezug zum ersten Sensorelement, welche vom ersten Sensorelement erfasst werden kann. Hierüber kann ein Winkel und/oder eine Winkelveränderung bestimmt werden. Somit kann mittels der Sensoreinrichtung eine relative Verdrehung des Fahrwerkbauteils zum Lager und um mindestens eine oder genau eine Drehachse des Lagers erfasst werden.

Gemäß einer Weiterbildung ist das Lager als ein Gummilager ausgebildet. Insbesondere ist das offene Profil und/oder das Fahrwerkbauteil als ein Blechlenker ausgebildet. Das Gummilager kann eine Außenhülse aufweisen. Insbesondere weist die Außenhülse eine Öffnung auf. Hierbei ist das erste Sensorelement außerhalb der Außenhülse und benachbart zu der Öffnung angeordnet. Das zweite Sensorelement der Sensoreinrichtung ist innerhalb der Außenhülse und benachbart zu der Öffnung angeordnet. Somit wirken das erste Sensorelement und das zweite Sensorelement durch die Öffnung der Außenhülse hindurch miteinander zusammen. Insbesondere ist die Öffnung der Außenhülse als eine Ausnehmung in dem Wandmaterial der Außenhülse ausgebildet.

Von besonderem Vorteil ist ein Verfahren zum Herstellen eines erfindungsgemäßen Fahrwerkbauteils, wobei das erste Sensorelement innerhalb des Innenraums angeordnet wird. Hierdurch kann das erste Sensorelement gegenüber äußeren Einflüssen geschützt werden und/oder eine möglichst nahe Anordnung an dem Lager und/oder dem zweiten Sensorelement realisiert werden.

Vorzugsweise wird das Sensorgehäuse durch die Durchgangsöffnung in der Wand des offenen Profils gesteckt, wodurch ein Abschnitt des Sensorgehäuses mit dem ersten Sensorelement innerhalb des Innenraums angeordnet wird. Ein weiterer Abschnitt des Sensorgehäuses kann außerhalb des Innenraums verbleiben. Insbesondere nachfolgend wird ein zweiter Steckabschnitt des Sensorgehäuses zum Herstellen eines Formschlusses in einen ersten Steckabschnitt in einem Rand der Durchgangsöffnung gesteckt. Hierdurch kann das Sensorgehäuse mindestens in Bezug zu zwei Raumrichtungen gehalten und/oder fixiert sein. Vorzugsweise wird anschließend das Sensorgehäuse mittels eines Befestigungsmittels an der Wand des Profils befestigt. Insbesondere wird das Sensorgehäuse hierdurch in Bezug zu einer dritten Raumrichtung gesichert. Vorzugsweise spannen die drei Raumrichtungen ein dreidimensionales kartesisches Koordinatensystem auf.

Insgesamt ergibt sich aufgrund des Befestigungsmittels und/oder des Formschlusses zwischen den beiden Steckabschnitten eine positionsfeste Anordnung des Sensorgehäuses an dem Fahrwerkbauteil. Vor oder nach dem Anordnen des Sensorgehäuses wird das Lager in der Lageraufnahme des Fahrwerkbauteils angeordnet. Insbesondere weist das Lager das zweite Sensorelement auf, wobei das Lager gerichtet in der Lageraufnahme angeordnet wird. Insbesondere wird das Lager mit dem zweiten Sensorelement derart gerichtet in der Lageraufnahme angeordnet, so dass das zweite Sensorelement mit einem möglichst minimalen Abstand zum ersten Sensorelement ausgerichtet ist.

Insbesondere handelt es sich bei den gemäß dem erfindungsgemäßen Verfahren hergestellten Fahrwerkbauteil um ein zuvor beschriebenes erfindungsgemäßes Fahrwerkbauteil. Vorzugsweise ist das Verfahren gemäß den im Zusammenhang mit dem hier beschriebenen erfindungsgemäßen Fahrwerkbauteil erläuterten Ausgestaltungen weitergebildet. Ferner kann das hier beschriebene Fahrwerkbauteil gemäß den im Zusammenhang mit dem Verfahren erläuterten Ausgestaltungen weitergebildet sein.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: eine Seitenansicht eines erfindungsgemäßen Fahrwerkbauteils,
- Fig. 2: einen teiltransparenten Ausschnitt einer weiteren Seitenansicht des erfindungsgemäßen Fahrwerkbauteils gemäß Fig. 1,
- Fig. 3: eine perspektivische Ansicht eines Sensorgehäuses und eines Lagers als Bestandteile des erfindungsgemäßen Fahrwerkbauteils gemäß Fig. 1 und 2,
- Fig. 4: einen teiltransparenten Ausschnitt einer ersten perspektivischen Ansicht eines Sensorgehäuses in einer ersten Montageposition zum Herstellen des erfindungsgemäßen Fahrwerkbauteils gemäß Fig. 1 und 2,
- Fig. 5: einen teiltransparenten Ausschnitt einer zweiten perspektivischen Ansicht eines Sensorgehäuses in einer zweiten Montageposition zum Herstellen des erfindungsgemäßen Fahrwerkbauteils gemäß Fig. 1 und 2,
- Fig. 6: einen teiltransparenten Ausschnitt einer dritten perspektivischen Ansicht eines Sensorgehäuses in einer dritten Montageposition zum Herstellen des erfindungsgemäßen Fahrwerkbauteils gemäß Fig. 1 und 2, und
- Fig. 7: einen Ausschnitt einer Seitenansicht eines nicht erfindungsgemäßen Fahrwerkbauteils.

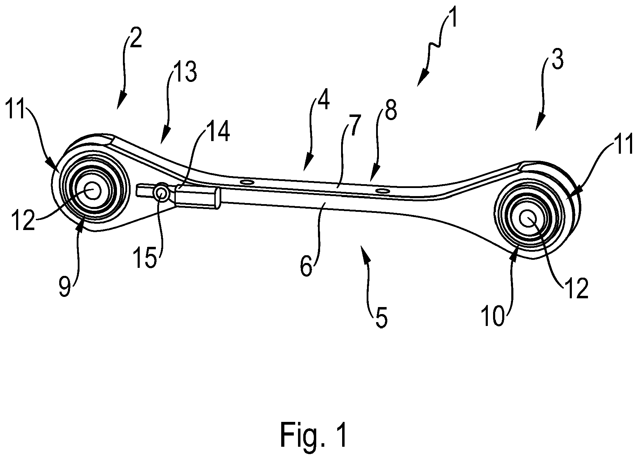

Figur 1 zeigt eine Seitenansicht eines erfindungsgemäßen Fahrwerkbauteils 1. Das Fahrwerkbauteil 1 ist bei diesem Ausführungsbeispiel als ein Blechlenker ausgebildet. Das Fahrwerkbauteil 1 weist einen ersten Endabschnitt 2 und einen zweiten Endabschnitt 3 auf. Zwischen den beiden Endabschnitten 2, 3 ist ein die Endabschnitte 2, 3 verbindender Verbindungsabschnitt 4 angeordnet. Die beiden Endabschnitte 2, 3 und der Verbindungsabschnitt 4 sind als ein einteiliges bzw. einstückiges Profil 5 ausgebildet. Hierbei ist das Profil 5 über seine Längserstreckung einseitig offen ausgebildet. Das Profil 5 bzw. mindestens der Verbindungsabschnitt 4 weist bei diesem Ausführungsbeispiel einen im Wesentlichen U-förmigen Querschnitt auf. Somit weist das Profil 5 drei U-förmig zueinander angeordnete Wände 6, 7, 8 auf. Hierbei sind die Wände 6 und 8 im Wesentlichen parallel zueinander angeordnet und erstrecken sich im Wesentlichen rechtwinklig oder quer zur Wand 7 von dieser in die gleiche Richtung weg.

Bei diesem Ausführungsbeispiel weist das Fahrwerkbauteil 1 ein Lager 9 und ein Lager 10 auf. Die Lager 9, 10 sind hier jeweils als ein Gummilager ausgebildet. Das Lager 9 ist in dem ersten Endabschnitt 2 und das Lager 10 in dem zweiten Endabschnitt 3 angeordnet. Hierzu weist der erste Endabschnitt 2 und der zweite Endabschnitt 3 jeweils eine Lageraufnahme 11 auf, in die das Lager 9 bzw. 10 gemäß diesem Ausführungsbeispiel eingepresst ist. Mittels des Lagers 9 bzw. 10 ist jeweils eine Drehachse 12 definiert bzw. vorgegeben, um die das Fahrwerkbauteil 1 rotierbar gelagert ist.

Des Weiteren weist das Fahrwerkbauteil 1 eine Sensoreinrichtung 13 auf. Die Sensoreinrichtung 13 hat ein Sensorgehäuse 14. Das Sensorgehäuse 14 ist mittels eines Befestigungsmittels 15 an einer Außenseite der Wand 6 des Profils 5 befestigt.

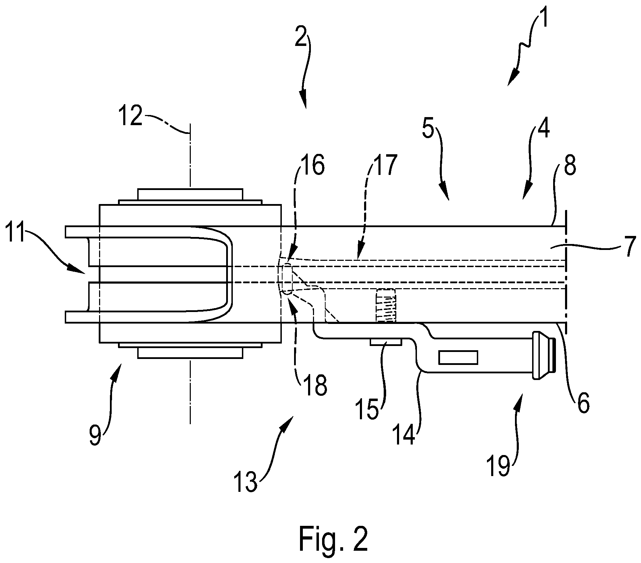

Figur 2 zeigt einen teiltransparenten Ausschnitt einer weiteren Seitenansicht des erfindungsgemäßen Fahrwerkbauteils 1 gemäß Figur 1. Bei diesem Ausführungsbeispiel ist das Befestigungsmittel 15 als eine Schraube ausgebildet. Alternativ kann das Befestigungsmittel 15 als eine Niete realisiert sein. Das Sensorgehäuse 14 weist ein erstes Sensorelement 16 auf. Das erste Sensorelement 16 ist bei diesem Ausführungsbeispiel als ein magnetfeldempfindlicher Sensor bzw. als ein Hall-Sensor ausgebildet. Das Sensorgehäuse 14 ist bei diesem Ausführungsbeispiel als ein Kunststoff-Spritzteil hergestellt. Des Weiteren ist das erste Sensorelement 16 gemäß diesem Beispiel vollständig in das Material des Sensorgehäuses 14 eingebettet. Mit anderen Worten ist das erste Sensorelement 16 in dem Material des Sensorgehäuses 13 gekapselt, wodurch das erste Sensorelement 16 gegenüber äußeren Einflüssen geschützt ist.

Das offene Profil 5 bildet einen mindestens teilweise freien Innenraum 17. Hierbei ist das erste Sensorelement 16 innerhalb des Innenraums 17 angeordnet. Das Sensorgehäuse 14 weist ein erstes Ende 18 und ein von dem ersten Ende 18 abgewandtes zweites Ende 19 auf. Das erste Sensorelement 16 ist am ersten Ende 18 des Sensorgehäuses 14 angeordnet. Das zweite Ende 19 ist bei diesem Ausführungsbeispiel als ein Steckabschnitt realisiert. Das als Steckabschnitt realisierte zweite Ende 19 dient zum Verbinden mit einer hier nicht näher dargestellten Leitung, die die Sensoreinrichtung 13 mit einer hier nicht näher dargestellten Auswerteeinheit verbindet.

Das erste Ende 18 bzw. das erste Sensorelement 16 ist dem Lager 9 zugewandt. Hierbei ist das Sensorgehäuse 14 derart an dem Profil 5 befestigt, dass der Abstand zwischen dem ersten Ende 18 bzw. dem ersten Sensorelement 16 einerseits und dem Lager 9 andererseits möglichst gering ist.

Das Sensorgehäuse 14 weist gemäß diesem Ausführungsbeispiel eine mehrfach gestufte Kontur auf. Hier weist das Sensorgehäuse 4 eine dreifach gestufte Kontur auf. Aufgrund dieser mehrfach gestuften Kontur ist eine zugleich funktionale als auch hinreichende flache Gestaltung des Sensorgehäuses 14 realisierbar.

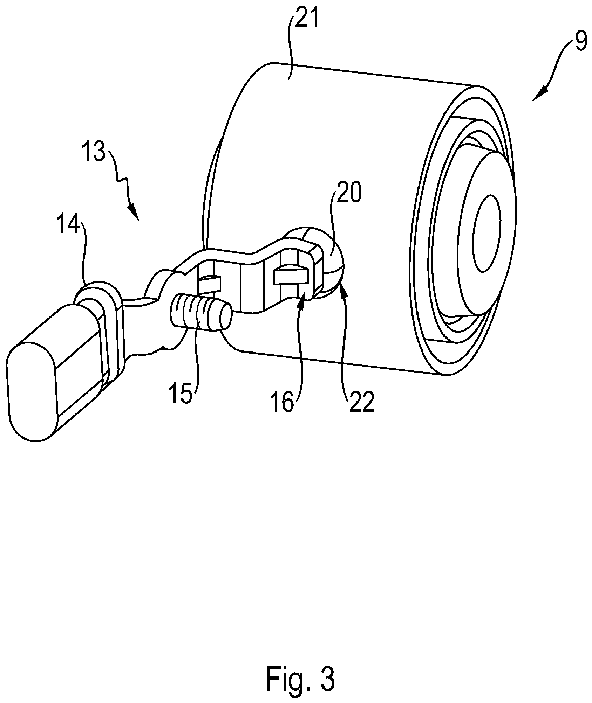

Figur 3 zeigt eine perspektivische Ansicht des Sensorgehäuses 14 und des Lagers 9 als Bestandteile des erfindungsgemäßen Fahrwerkbauteils 1 gemäß Figuren 1 und 2. Hierbei ist zugunsten einer besseren Übersichtlichkeit das offene Profil 5 weggelassen. Das Lager 9 weist ein zweites Sensorelement 20 auf. Das zweite Sensorelement 20 ist ein Bestandteil der Sensoreinrichtung 13. Das zweite Sensorelement 20 ist bei diesem Ausführungsbeispiel als ein Magnet bzw. Permanentmagnet innerhalb eines Gummimaterials des Lagers 9 ausgebildet. Hierbei kann das zweite Sensorelement 20 als ein Signalgeber und das erste Sensorelement 16 als ein Signalempfänger aufgefasst werden. Entsprechend wirken das erste Sensorelement 16 und das zweite Sensorelement 20 zusammen.

Das Lager 9 weist eine Außenhülse 21 auf. Die Außenhülse 21 hat eine Öffnung 22. Hierbei ist die Öffnung 22 als eine Ausnehmung im Wandmaterial der Außenhülse 21 realisiert. Des Weiteren ist das Lager 9 derart ausgerichtet bzw. gerichtet angeordnet, dass die Öffnung 22 dem ersten Sensorelement 16 zugewandt ist. Somit ist das erste Sensorelement 16 außerhalb der Außenhülse 21 und benachbart zu der Öffnung 22 angeordnet. Das zweite Sensorelement 20 ist innerhalb der Außenhülse 21 benachbart zu der Öffnung 22 angeordnet. Das erste Sensorelement 16 und das zweite Sensorelement 20 sind mit einem möglichst geringen Abstand zueinander angeordnet bzw. ausgerichtet. Hierbei stehen das erste Sensorelement 16 und das zweite Sensorelement 20 durch die Öffnung 22 in Wirkverbindung miteinander.

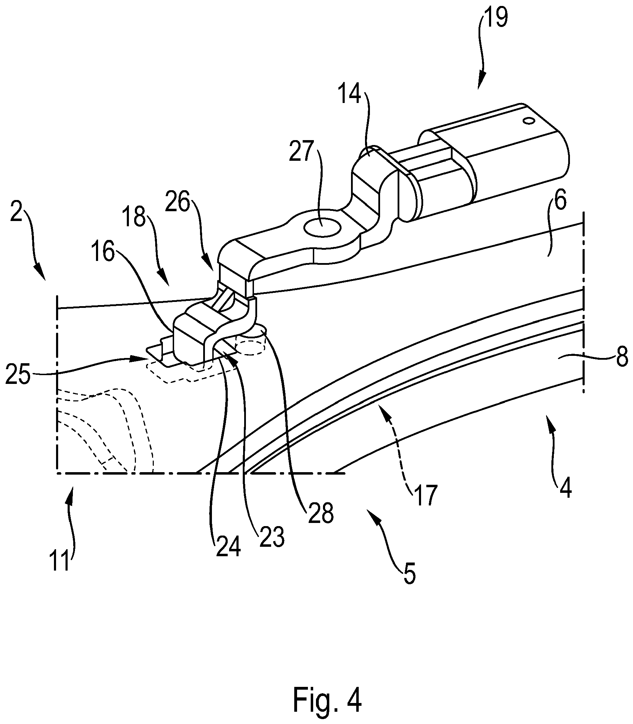

Figur 4 zeigt einen teiltransparenten Ausschnitt einer ersten perspektivischen Ansicht des Sensorgehäuses 14 in einer ersten Montageposition zum Herstellen des erfindungsgemäßen Fahrwerkbauteils 1 gemäß Figuren 1 und 2. Die Wand 6 des offenen Profils 5 weist eine Durchgangsöffnung 23 auf. Die Durchgangsöffnung 23 ist benachbart zur Lageraufnahme 11 des ersten Endabschnitts 2 angeordnet. Durch die Durchgangsöffnung 23 ist der von den Wänden 6, 7, 8 des Profils 5 gebildete Innenraum 17 zugänglich. Die Durchgangsöffnung 23 weist einen Rand 24 auf, der bei diesem Ausführungsbeispiel eine im Wesentlichen rechteckförmige Gestalt aufweist.

Der Durchmesser der Durchgangsöffnung 23 ist derart ausgebildet, so dass das Sensorgehäuse 14 mindestens mit seinem ersten Ende 18 bzw. dem ersten Sensorelement 16 voran durch die Durchgangsöffnung 23 hindurch in den Innenraum 17 geführt werden kann.

Der Rand 24 der Durchgangsöffnung 23 weist einen ersten Steckabschnitt 25 auf. Das Sensorgehäuse 14 weist einen zweiten Steckabschnitt 26 auf. Wie anhand der nachfolgenden Figur noch näher erläutert wird, sind der erste Steckabschnitt 25 und der zweite Steckabschnitt 26 zum Ausbilden eines Formschlusses korrespondierend zueinander ausgebildet.

Das Sensorgehäuse 14 hat einen Durchbruch 27. Bei diesem Ausführungsbeispiel ist der Durchbruch 27 etwa mittig zwischen den beiden Enden 18, 19 angeordnet. Des Weiteren weist das Profil 5 bzw. die Wand 6 eine Befestigungsöffnung 28 auf. Sowohl der Durchbruch 27 als auch die Befestigungsöffnung 28 dienen gemäß Figuren 1 bis 3 zur Durchführung des Befestigungsmittels 15 und damit zum Befestigen des Sensorgehäuses 14 an dem Profil 5 gemäß Figuren 1 und 2.

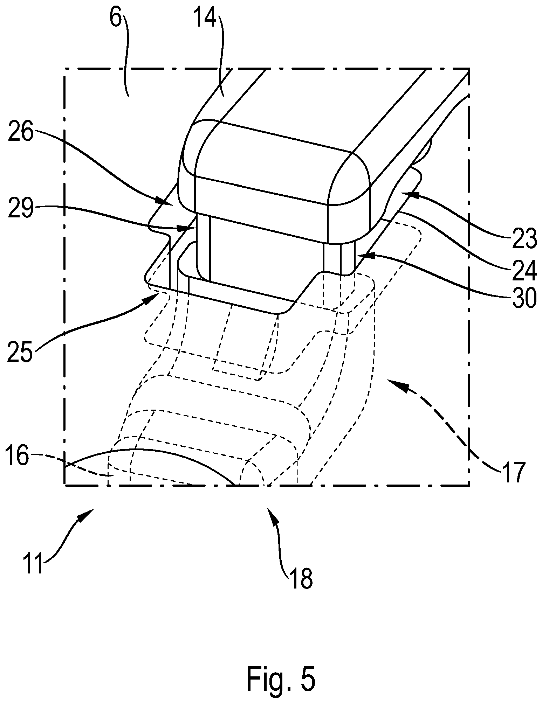

Figur 5 zeigt einen teiltransparenten Ausschnitt einer zweiten perspektivischen Ansicht des Sensorgehäuses 14 in einer zweiten Montageposition zum Herstellen des erfindungsgemäßen Fahrwerkbauteils 1 gemäß Figuren 1 und 2. In der hier dargestellten Montageposition ist das Sensorgehäuse 14 soweit durch die Durchgangsöffnung 23 in den Innenraum 17 hineingesteckt, so dass der zweite Steckabschnitt 26 des Sensorgehäuses 14 innerhalb der Öffnung 23 angeordnet ist. Mit anderen Worten umgibt in dieser Montageposition der Rand 24 den zweiten Steckabschnitt 26 des Sensorgehäuses 14. Bei diesem Ausführungsbeispiel ist der zweite Steckabschnitt 26 als eine Art Einschnürung des Sensorgehäuses 14 ausgebildet. Im Einzelnen weist das Sensorgehäuse 14 zum Ausbilden des zweiten Steckabschnitts 26 zwei Nuten 29, 30 auf. Die Nuten 29, 30 sind an voneinander abgewandt liegenden Seiten des Sensorgehäuses 14 ausgebildet. Hierdurch ist der als Einschnürung ausgebildete zweite Steckabschnitt 26 aufgrund einer abschnittsweise ausgebildeten Durchmesserreduzierung des Sensorgehäuses 14 realisiert.

Der erste Steckabschnitt 25 ist bei diesem Ausführungsbeispiel als eine nutartige Vertiefung im Rand 24 der Durchgangsöffnung 23 ausgebildet. Des Weiteren ist bei diesem Ausführungsbeispiel der erste Steckabschnitt 25 bzw. die nutartige Vertiefung in einem der Lageraufnahme 11 zugewandten Abschnitt des Randes 24 ausgebildet.

Zum Herstellen einer formschlüssigen Verbindung zwischen dem ersten Steckabschnitt 25 und dem zweiten Steckabschnitt 26 wird das Sensorgehäuse 14 ausgehend aus der hier dargestellten Montageposition in Richtung der Lageraufnahme 11 verschoben. Hierdurch wird der zweite Steckabschnitt 26 des Sensorgehäuses 14 formschlüssig in den ersten Steckabschnitt 25 des Randes 24 eingepresst. Aufgrund dieses Formschlusses ist das Sensorgehäuse 14 bereits in Bezug auf zwei Raumrichtungen an dem Profil 5 gehalten.

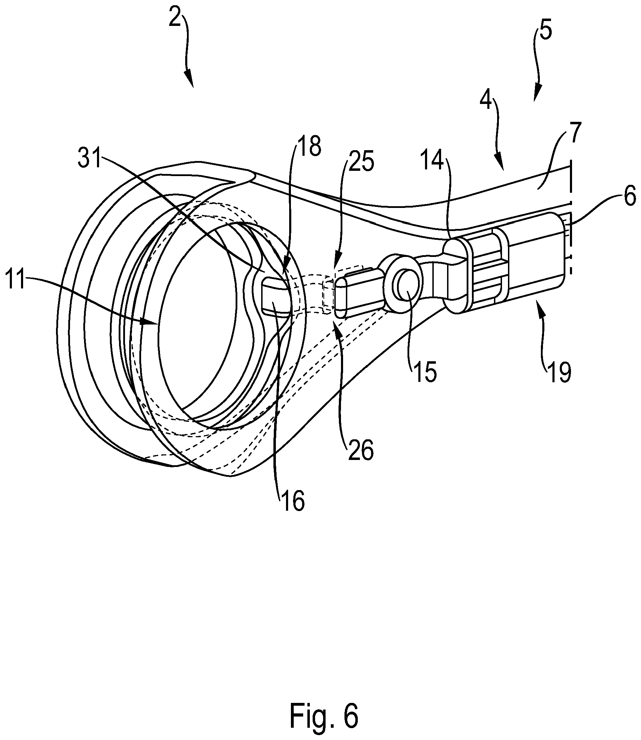

Figur 6 zeigt einen teiltransparenten Ausschnitt einer dritten perspektivischen Ansicht des Sensorgehäuses 14 in einer dritten Montageposition zum Herstellen des erfindungsgemäßen Fahrwerkbauteils 1 gemäß Figuren 1 und 2. Hierbei ist nach dem Einstecken des zweiten Steckabschnitts 26 in den ersten Steckabschnitt 25, wie anhand der vorangegangenen Figur 5 beschrieben, das Sensorgehäuse 14 mittels des Befestigungsmittels 15 endgültig am Profil 5 fixiert bzw. gesichert. Hierbei ergibt sich mittels des Befestigungsmittels 15 eine Sicherung des Sensorgehäuses 14 an dem Profil 5 mindestens in Bezug auf eine dritte Raumrichtung. Insbesondere spannen die vorstehend eingeführten insgesamt drei Raumrichtungen einen dreidimensionalen kartesischen Raum auf.

Die Lageraufnahme 11 ist hier ohne das Lager 9 im Endabschnitt 2 gemäß Figuren 1 und 2 dargestellt. Hierdurch ist erkennbar, dass das erste Ende 18 des Sensorgehäuses 14 bzw. das erste Sensorelement 16 innerhalb eines Freiraums 31 in der Lageraufnahme 11 angeordnet ist. Hierdurch ist es möglich, das erste Sensorelement 16 mit einem möglichst geringen Abstand an das Lager 9 bzw. an das zweite Sensorelement 20 des Lagers 9 gemäß Figuren 1, 2 oder 3 anzuordnen.

Während gemäß den Figuren 4, 5 und 6 die Montage des Sensorgehäuses 14 an das Profil 5 ohne das in der Lageraufnahme 11 montierte Lager 9 gezeigt ist, kann eine solche Montage auch bei einem bereits in der Lageraufnahme 11 montierten Lager 9 erfolgen.

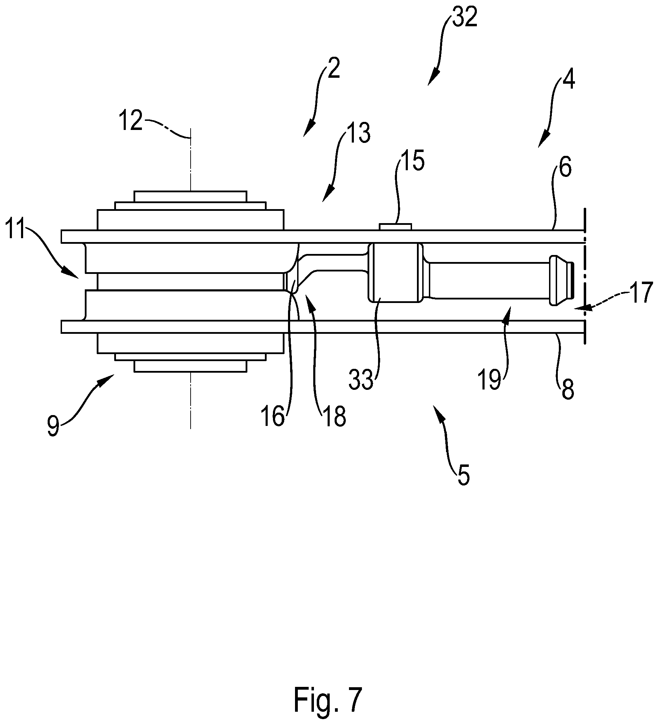

Figur 7 zeigt einen Ausschnitt einer Seitenansicht eines nicht erfindungsgemäßen Fahrwerkbauteils 32. Gleiche Merkmale wie zuvor, tragen die gleichen Bezugszeichen. Insoweit wird auch auf die vorangegangene Beschreibung verwiesen. Anstelle des Sensorgehäuses 14 gemäß Figuren 1 bis 6 wird hier ein Sensorgehäuse 33 verwendet. Das Sensorgehäuse 33 ist vollständig innerhalb des Innenraums 17 angeordnet. Das Sensorgehäuse 33 weist ähnlich dem Sensorgehäuse 14 ebenfalls ein erstes Ende 18 mit einem ersten Sensorelement 16 auf. Im Unterschied zu dem Sensorgehäuse 14 ist das hier dargestellte Sensorgehäuse 33 jedoch nicht mehrfach gestuft ausgebildet. Stattdessen ist das Sensorgehäuse 33 im Vergleich zum Sensorgehäuse 14 flacher ausgebildet. Das Sensorgehäuse 33 ist mittels des Befestigungsmittels 15 an der Wand 6 des Profils 5 befestigt.

### Bezugszeichen

- 1: Fahrwerkbauteil
- 2: erster Endabschnitt
- 3: zweiter Endabschnitt
- 4: Verbindungsabschnitt
- 5: Profil
- 6: Rand
- 7: Rand
- 8: Rand
- 9: Lager
- 10: Lager
- 11: Lageraufnahme
- 12: Drehachse
- 13: Sensoreinrichtung
- 14: Sensorgehäuse
- 15: Befestigungsmittel
- 16: erstes Sensorelement
- 17: Innenraum
- 18: erstes Ende
- 19: zweites Ende
- 20: zweites Sensorelement
- 21: Außenhülse
- 22: Öffnung
- 23: Durchgangsöffnung
- 24: Rand
- 25: erster Steckabschnitt
- 26: zweiter Steckabschnitt
- 27: Durchbruch
- 28: Befestigungsöffnung
- 29: Nut
- 30: Nut
- 31: Freiraum
- 32: Fahrwerkbauteil
- 33: Sensorgehäuse

## Patentansprüche

1. Fahrwerkbauteil mit einem ersten Endabschnitt (2) und einem zweiten Endabschnitt (3), wobei zwischen den beiden Endabschnitten (2, 3) ein Verbindungsabschnitt (4) angeordnet ist, mit mindestens einem Lager (9, 10) in einem der beiden Endabschnitte (2, 3), und mit einer Sensoreinrichtung (13), wobei ein Sensorgehäuse (14, 33) ein erstes Sensorelement (16) der Sensoreinrichtung (13) aufweist und die beiden Endabschnitte (2, 3) und der Verbindungsabschnitt (4) als ein einteiliges und über die Längserstreckung einseitig offenes Profil (5) ausgebildet ist, wobei das offene Profil (5) einen mindestens teilweise freien Innenraum (17) bildet, **dadurch gekennzeichnet, dass** das erste Sensorelement (16) innerhalb des Innenraums (17) angeordnet ist, wobei eine Wand (6) des offenen Profils (5) eine Durchgangsöffnung (23) aufweist und sich das Sensorgehäuse (14) von einer Außenseite der Wand (6) durch die Durchgangsöffnung (23) in den Innenraum (17) erstreckt.

2. Fahrwerkbauteil nach Anspruch 1, **dadurch gekennzeichnet, dass** das Sensorgehäuse (14, 33) mittels eines Befestigungsmittels (15), insbesondere einer Niete oder einer Schraube, an einer Wand (6) des offenen Profils (5) befestigt ist.

3. Fahrwerkbauteil nach Anspruch 1 oder 2, **dadurch gekennzeichnet, dass** das Sensorgehäuse (14, 33) mindestens teilweise in dem Innenraum (17) angeordnet ist, insbesondere liegt das Sensorgehäuse (14) an einer Außenseite und/oder an einer Innenseite einer Wand (6) des offenen Profils (5) an.

4. Fahrwerkbauteil nach einem der vorhergehenden Ansprüche, **dadurch gekennzeichnet, dass** ein Abschnitt des Sensorgehäuses (14) mit dem ersten Sensorelement (16) innerhalb des Innenraums (17) angeordnet ist.

5. Fahrwerkbauteil nach Anspruch 4, **dadurch gekennzeichnet, dass** ein Rand (24) der Durchgangsöffnung (23) einen ersten Steckabschnitt (25) aufweist, wobei der erste Steckabschnitt (25) formschlüssig mit einem korrespondierend zu dem ersten Steckabschnitt (25) ausgebildeten zweiten Steckabschnitt (26) des Sensorgehäuses (14) zusammenwirkt, insbesondere ist der erste Steckabschnitt (25) als eine nutartige Vertiefung im Rand (24) der Durchgangsöffnung (23) ausgebildet, wobei eine korrespondierend zu der nutartigen Vertiefung ausgebildete und den zweiten Steckabschnitt (26) bildende Einschnürung des Sensorgehäuses (14) in die nutartige Vertiefung eingesteckt ist, vorzugsweise ist die Einschnürung aufgrund einer abschnittsweise ausgebildeten Durchmesserreduzierung des Sensorgehäuses (14) gebildet.

6. Fahrwerkbauteil nach einem der vorhergehenden Ansprüche, **dadurch gekennzeichnet, dass** das Sensorgehäuse (14) eine mindestens einfach gestufte, zweifach gestufte oder dreifach gestufte Kontur aufweist, insbesondere ist das erste Sensorelement (16) an einem ersten Ende (18) des Sensorgehäuses (14, 33) angeordnet und/oder ist ein Steckabschnitt an einem zweiten Ende (19) des Sensorgehäuses (14, 33) ausgebildet.

7. Fahrwerkbauteil nach einem der vorhergehenden Ansprüche, **dadurch gekennzeichnet, dass** das Lager (9) ein zweites Sensorelement (20) der Sensoreinrichtung (13) aufweist und das erste Sensorelement (16) mit dem zweiten Sensorelement (20) zusammenwirkt, insbesondere ist das erste Sensorelement (16) als ein magnetfeldempfindlicher Sensor und das zweite Sensorelement (20) als ein Magnet ausgebildet.

8. Fahrwerkbauteil nach einem der vorhergehenden Ansprüche, **dadurch gekennzeichnet, dass** das Lager (9, 10) als ein Gummilager und/oder das offene Profil (5) als ein Blechlenker ausgebildet ist, insbesondere weist das Gummilager eine Außenhülse (21) mit einer Öffnung (22) auf, wobei das erste Sensorelement (16) außerhalb der Außenhülse (21) benachbart zu der Öffnung (22) und ein zweites Sensorelement (20) der Sensoreinrichtung (13) innerhalb der Außenhülse (21) benachbart zu der Öffnung (22) angeordnet sind.

9. Verfahren zum Herstellen eines Fahrwerkbauteils (1, 32) gemäß einem der vorhergehenden Ansprüche, wobei das erste Sensorelement (16) innerhalb des Innenraums (17) angeordnet wird.

10. Verfahren nach Anspruch 9, **dadurch gekennzeichnet, dass** das Sensorgehäuse (14) durch die Durchgangsöffnung (23) in der Wand (6) des offenen Profils (5) gesteckt wird, wodurch ein Abschnitt des Sensorgehäuses (14) mit dem ersten Sensorelement (16) innerhalb des Innenraums (17) angeordnet wird, insbesondere wird nachfolgend ein zweiter Steckabschnitt (26) des Sensorgehäuses (14) zum Herstellen eines Formschlusses in einen ersten Steckabschnitt (25) in einem Rand (24) der Durchgangsöffnung (23) gesteckt, vorzugsweise wird das Sensorgehäuse (14) hiernach mittels eines Befestigungsmittels (15) an der Wand (6) des offenen Profils (5) befestigt.

## Claims

1. Chassis component comprising a first end section (2) and a second end section (3), wherein a connecting section (4) is arranged between the two end sections (2, 3), comprising at least one bearing (9, 10) in one of the two end sections (2, 3), and comprising a sensor device (13), wherein a sensor housing (14, 33) has a first sensor element (16) of the sensor device (13) and the two end sections (2, 3) and the connecting section (4) are designed as a single-part profile (5) which is open on one side over the longitudinal extent, wherein the open profile (5) forms an at least partially free internal space (17), **characterized in that** the first sensor element (16) is arranged within the internal space (17), wherein a wall (6) of the open profile (5) has a passage opening (23) and the sensor housing (14) extends from an outer side of the wall (6), through the passage opening (23), into the internal space (17).

2. Chassis component according to Claim 1, **characterized in that** the sensor housing (14, 33) is fastened to a wall (6) of the open profile (5) by means of a fastening means (15), in particular a rivet or a screw.

3. Chassis component according to Claim 1 or 2, **characterized in that** the sensor housing (14, 33) is at least partially arranged in the internal space (17), in particular the sensor housing (14) bears against an outer side and/or against an inner side of a wall (6) of the open profile (5).

4. Chassis component according to any of the preceding claims, **characterized in that** a portion of the sensor housing (14) with the first sensor element (16) is arranged within the internal space (17).

5. Chassis component according to Claim 4, **characterized in that** an edge (24) of the passage opening (23) has a first plug-in portion (25), wherein the first plug-in portion (25) interacts in an interlocking manner with a second plug-in portion (26) which is designed in a manner corresponding to the first plug-in portion (25), of the sensor housing (14), in particular the first plug-in portion (25) is designed as a groove-like recess in the edge (24) of the passage opening (23), wherein a constriction, which is designed in a manner corresponding to the slot-like recess and forms the second plug-in portion (26), in the sensor housing (14) is inserted into the slot-like recess, preferably the constriction is formed on account of a portion-by-portion reduction in diameter of the sensor housing (14).

6. Chassis component according to any of the preceding claims, **characterized in that** the sensor housing (14) has an at least single-step, double-step or triple-step contour, in particular the first sensor element (16) is arranged at a first end (18) of the sensor housing (14, 33) and/or a plug-in portion is formed at a second end (19) of the sensor housing (14, 33).

7. Chassis component according to any of the preceding claims, **characterized in that** the bearing (9) has a second sensor element (20) of the sensor device (13) and the first sensor element (16) interacts with the second sensor element (20), in particular the first sensor element (16) is designed as a magnetic field-sensitive sensor and the second sensor element (20) is designed as a magnet.

8. Chassis component according to any of the preceding claims, **characterized in that** the bearing (9, 10) is designed as a rubber bearing and/or the open profile (5) is designed as a sheet-metal arm, in particular the rubber bearing has an outer sleeve (21) with an opening (22), wherein the first sensor element (16) is arranged outside the outer sleeve (21) adjacent to the opening (22) and a second sensor element (20) of the sensor device (13) is arranged within the outer sleeve (21) adjacent to the opening (22).

9. Method for producing a chassis component (1, 32) according to any of the preceding claims, wherein the sensor element (16) is arranged within the internal space (17).

10. Method according to Claim 9, **characterized in that** the sensor housing (14) is plugged through the passage opening (23) in the wall (6) of the open profile (5), as a result of which a portion of the sensor housing (14) with the first sensor element (16) is arranged within the internal space (17), in particular a second plug-in portion (26) of the sensor housing (14) is subsequently plugged into a first plug-in portion (25) in an edge (24) of the passage opening (23) in order to establish an interlocking connection, preferably the sensor housing (14) is fastened to the wall (6) of the open profile (5) by means of a fastening means (15) after this.

## Revendications

1. Composant de châssis comprenant une première portion d'extrémité (2) et une deuxième portion d'extrémité (3), une portion de liaison (4) étant disposées entre les deux portions d'extrémité (2, 3), comprenant au moins un palier (9, 10) dans l'une des deux portions d'extrémité (2, 3) et comprenant un dispositif capteur (13), un boîtier de capteur (14, 33) possédant un premier élément capteur (16) du dispositif capteur (13) et les deux portions d'extrémité (2, 3) ainsi que la portion de liaison (4) étant réalisées sous la forme d'un profilé (5) monobloc et ouvert d'un côté sur l'extension longitudinale, le profilé (5) ouvert formant un espace intérieur (17) au moins partiellement libre, **caractérisé en ce que** le premier élément capteur (16) est disposé à l'intérieur de l'espace intérieur (17), une paroi (6) du profilé (5) ouvert possédant une ouverture de passage (23) et le boîtier de capteur (14) s'étendant depuis un côté extérieur de la paroi (6) à travers l'ouverture de passage (23) dans l'espace intérieur (17).

2. Composant de châssis selon la revendication 1, **caractérisé en ce que** le boîtier de capteur (14, 33) est fixé à une paroi (6) du profilé (5) ouvert à l'aide d'un moyen de fixation (15), notamment d'un rivet ou d'une vis.

3. Composant de châssis selon la revendication 1 ou 2, **caractérisé en ce que** le boîtier de capteur (14, 33) est disposé au moins partiellement dans l'espace intérieur (17), le boîtier de capteur (14) repose notamment contre un côté extérieur et/ou contre un côté intérieur d'une paroi (6) du profilé (5) ouvert.

4. Composant de châssis selon l'une des revendications précédentes, **caractérisé en ce qu'**une portion du boîtier de capteur (14) pourvue du premier élément capteur (16) est disposée à l'intérieur de l'espace intérieur (17).

5. Composant de châssis selon la revendication 4, **caractérisé en ce qu'**un bord (24) de l'ouverture de passage (23) possède une première portion d'enfichage (25), la première portion d'enfichage (25) coopérant par complémentarité de formes avec une deuxième portion d'enfichage (26) du boîtier de capteur (14), configurée en correspondance avec la première portion d'enfichage (25), la première portion d'enfichage (25) est notamment réalisée sous la forme d'une cavité de type rainure dans le bord (24) de l'ouverture de passage (23), un rétrécissement du boîtier de capteur (14) configuré en correspondance avec la cavité de type rainure et qui forme la deuxième portion d'enfichage (26) étant enfiché dans la cavité de type rainure, le rétrécissement étant de préférence formé sur la base d'une réduction du diamètre du boîtier de capteur (14) configurée par portions.

6. Composant de châssis selon l'une des revendications précédentes, **caractérisé en ce que** le boîtier de capteur (14) présente un contour au moins à simple gradation, à double gradation ou à triple gradation, le premier élément capteur (16) est notamment disposé à une première extrémité (18) du boîtier de capteur (14, 33) et/ou une portion d'enfichage est formée à une deuxième extrémité (19) du boîtier de capteur (14, 33).

7. Composant de châssis selon l'une des revendications précédentes, **caractérisé en ce que** le palier (9) possède un deuxième élément capteur (20) du dispositif capteur (13) et le premier élément capteur (16) coopère avec le deuxième élément capteur (20), le premier élément capteur (16) est notamment réalisé sous la forme d'un capteur sensible aux champs magnétiques et le deuxième élément capteur (20) sous la forme d'un aimant.

8. Composant de châssis selon l'une des revendications précédentes, **caractérisé en ce que** le palier (9, 10) est réalisé sous la forme d'un palier en caoutchouc et/ou le profilé (5) ouvert sous la forme d'un bras oscillant en tôle, le palier en caoutchouc possède notamment une douille externe (21) pourvue d'une ouverture (22), le premier élément capteur (16) étant disposé à l'extérieur de la douille externe (21) adjacent à l'ouverture (22) et un deuxième élément capteur (20) du dispositif capteur (13) à l'intérieur de la douille externe (21) adjacent à l'ouverture (22).

9. Procédé de fabrication d'un composant de châssis (1, 32) selon l'une des revendications précédentes, le premier élément capteur (16) étant disposé à l'intérieur de l'espace intérieur (17).

10. Procédé selon la revendication 9, **caractérisé en ce que** le boîtier de capteur (14) est enfiché à travers l'ouverture de passage (23) dans la paroi (6) du profilé (5) ouvert, moyennant quoi une portion du boîtier de capteur (14) pourvue du premier élément capteur (16) est disposée à l'intérieur de l'espace intérieur (17), une deuxième portion d'enfichage (26) du boîtier de capteur (14) est notamment enfichée ensuite dans une première portion d'enfichage (25) dans un bord (24) de l'ouverture de passage (23) en vue de réaliser une complémentarité de formes, le boîtier de capteur (14) est de préférence, après cela, fixé à une paroi (6) du profilé (5) ouvert à l'aide d'un moyen de fixation (15).
